# Europäisches Patentamt
## European Patent Office
### Office européen des brevets

(19)

(11) Veröffentlichungsnummer: **0 162 284**
**B1**

(12)

# EUROPÄISCHE PATENTSCHRIFT

(45) Veröffentlichungstag der Patentschrift:
**18.01.89**

(51) Int. Cl.⁴: **C 04 B 35/10,** F 04 B 21/08 //
**E21B21/00**

(21) Anmeldenummer: **85104616.9**

(22) Anmeldetag: **17.04.85**

(54) Verfahren zum Herstellen von Keramik-Zylinderhülsen für Bohrungspumpen für geologische Bohrungen.

(30) Priorität: **22.05.84 HU 196784**

(43) Veröffentlichungstag der Anmeldung:
**27.11.85 Patentblatt 85/48**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**EP-A- 0 098 119**
**DE-B- 1 052 294**
**DE-B- 1 070 984**

(73) Patentinhaber: **ENERGIAGAZDALKODASI INTEZET,**
**33-34, Bem-rakpart, H-1027 Budapest II (HU)**

(72) Erfinder: **Balogh, Lajos, Dipl.-Ing., Baranyi tér. 13,**
**H-1117 Budapest (HU)**

(74) Vertreter: **Patentanwälte Viering & Jentschura,**
**Steinsdorfstrasse 6, D-8000 München 22 (DE)**

**Beschreibung**

Die Erfindung betrifft ein Verfahren zum Herstellen von Keramik-Zylinderhülsen für Bohrungspumpen für geologische Bohrungen.

Wie bekannt, verwendet man bei geologischen Bohrungen (Wasser, Öl, Bauxit, usw.) die Bohrungspumpen für das Einpressen von Spül-Bohrungslösungen oder von Wasser in die Bohrung; in anderen Fällen werden diese Pumpen, besonders bei Gruben, zum Absaugen des Grubenwassers verwendet.

Es ist weiter bekannt, dass die Pumpen für geologische Bohrungen als von aussen angetriebene, horizontal angeordnete, zweizylindrige Geräte mit doppeltwirkenden Zylindern aufgebaut sind, in welchen ein Zahnrad-Reduktor eingebaut ist. Die theoretische Leistungsfähigkeit und der maximale Druck dieser Pumpen hängt immer von dem inneren Durchmesser der Zylinderhülsen ab: ihre Werte betragen bei Durchmessern von 80, 90, 100 mm: 13,5, 18, 23,4 m³/h; 6,2, 4,9, 3,9 MN/m².

Die für geologische Bohrungen verwendeten Pumpenanlagen können in zwei Hauptgruppen aufgeteilt werden.

Für Pumpen mit kleinen Leistungen wurden mit Rücksicht auf die oben erwähnten hohen Druckwerte, zwecks Verminderung der Reibung sowie zwecks Erhöhung der Lebensdauer der Pumpen solche Zylinderhülsen entwickelt, in welche druck- und reibungsfeste keramische Hülsen eingesetzt sind. Die Keramik ermöglicht nämlich eine Erhöhung der Lebensdauer gegenüber aus Stahl hergestellten Zylinderhülsen um das 5–10fache.

Bei Hochleistungspumpen war die Anwendung von Keramikhülsen bisher nicht möglich. Die Länge der Zylinderhülsen von grossen Pumpenanlagen bzw. der Hochleistungspumpen liegt ungefähr bei 270 mm bei einem Durchmesser von 80–160 mm. Diese Abmessungen waren bei Herstellung von Keramikhülsen, wegen Formungsproblemen, Einhalten der vorgeschriebenen Toleranzwerte und Handhabung von entsprechenden Porositäts-Härteparameter-Forderungen bei einer Serienproduktion nicht realisisierbar.

Laut bisherigen Versuchen sind im Verlauf des Ausbrennens der Keramik unvermeidbar zustandegekommene Ovalitäten in den meisten Fällen nur durch tagelang dauerndes Schleifen ausgleichbar. Die Herstellung von Keramikkörpern grosser Abmessungen mit sehr strengen Toleranzparametern wurde auch dadurch erschwert, dass Einrichtungen zum Einhalten von engen Toleranzbereichen nicht zur Verfügung standen. Es ist nämlich wohlbekannt, dass auch die modernsten Extruder nur maximal bis zu Längen von 160–180 mm bei einer maximalen Wanddicke bis zu 10 mm effektiv sind.

Wegen der oben erwähnten technologischen Schwierigkeiten hat man bei Hochleistungspumpen zur Erhöhung der Lebensdauer der Zylinderhülsen anstelle von Keramikhülsen besonders harten und reibungsfesten Stahl verwendet, wobei die Oberfläche mit einer Hartschicht, z.B. durch ein Zementierungsverfahren, Nitridverfahren oder ähnliche Verfahren, die eine harte und reibungsfeste Oberfläche sicherstellen, versehen waren. Demzufolge konnte man die Lebensdauer von 48–50 Stunden bei unbehandelten Oberflächen durch die erwähnte Oberflächenbehandlung bis auf 200 Stunden erhöhen.

Durch die Erfindung wird die Aufgabe gelöst, die Lebensdauer von Hochleistungspumpen-Zylinderhülsen dadurch auf 800–1000 Stunden zu erhöhen, dass die Anwendung von Keramikhülsen vorgeschlagen wird, die im Sinne der Erfindung mit einem vorgeschriebenen Toleranzwert bzw. -bereich geformt werden können, derart, dass ein Toleranzbereich von 0,5–1,0 mm bei der Herstellung der rohrförmigen Keramikhülse bei der Serienherstellung eingehalten werden kann bzw. dass im Hinblick auf die vorgeschriebenen Aussen- und Innendurchmesser der Keramikhülse eine nachträgliche Bearbeitung des fertigen Keramikkörpers erübrigt wird.

Das Verfahren gemäss der Erfindung beruht insbesondere auf der Erkenntnis, dass – falls das Formen der Keramiksuspension in einem zylindrischen Topf mit geschlossenem Boden durchgeführt wird – dieser geschlossene Bodenteil den zylindrischen Teil des Keramikkörpers beim Schrumpfen innerhalb von zugelassenen Toleranzgrenzen hält, und zwar ohne Verzerrung der Formgestalt. Zu dem Erfindungsgedanken gehört auch die Erkenntnis, dass dann, wenn die abgeformte Keramiksuspension in der ersten Phase zuerst nur teilweise, d.h. bei einer Temperatur von 1400–1500 °C gebrannt wird, der Keramikkörper seine endgültige Festigkeit noch nicht erreicht, weil der Wert der Restporosität noch 3–6% ist. Deswegen kann dieser noch nicht ganz ausgebrannte Keramikkörper leicht auf die gewünschten Abmessungen bearbeitet werden. Danach, in der zweiten, d.h. endgültigen Ausbrennphase wird der schon auf die gewünschte Form bearbeitete Keramikkörper bei einer Temperatur von 1500–1700 °C völlig ausgebrannt, und der geschlossene Bodenteil des topfförmigen Keramikkörpers wird mit einer Diamantscheibe abgestochen. Dieses Abstechen kann aber auch bereits nach dem ersten Brennzyklus durchgeführt werden. Nach unseren Erfahrungen liegen die Form-Deformationen, die aus der Endschrumpfung stammen, mit 95–98% in dem zugelassenen Toleranzbereich.

Vorzugsweise wird die Keramik-Einlage statt durch Einschrumpfung in die Zylinderhülse mit Hilfe von Vernetzungsepoxyharz in die Zylinderhülse eingeklebt und in dieser festgelegt.

Nach unseren Erfahrungen nämlich ist der Zugfestigkeitswert von Tonerde mit minimal 96% Aluminiumoxidgehalt 25–30 kg/mm². Bei dickwandigen Röhren ist der maximal zulässige Innendruckwert bei Keramik 1/10 des Zugfestigkeitswertes, was einen zugelassenen Betriebsdruck von 250–300 kg/cm² bedeutet. Da aber der effektive Betriebsdruck bei 30–100 kg/cm² liegt, kann leicht eingesehen werden, dass die Anwendung einer Schrumpfverbindung begründet entfallen kann und dass das Fixieren des Keramik-Rohres mit Epoxykunstharz einen annehmbaren Druckwert-Parameter sicherstellt. Das Einkleben der Keramikeinlage kann in vorteilhafter Weise auch dadurch unterstützt werden, dass zwischen der Zylinderhülse und dem Keramikrohr eine lockere Passung vorgesehen wird, die von dem Klebemittel ausgefüllt wird, wodurch eventuelle Abweichungen des äusseren Durchmessers der Keramikhülse leicht korrigierbar sind, so dass lange Schleifmassnahmen an der äusseren Oberfläche des Keramikkörpers überflüssig werden.

Der wichtigste Vorteil des Verfahrens gemäss der Erfindung liegt darin, dass durch die Möglichkeit, die geologischen Hochleistungs-Bohrungspumpen mit Keramikhülsen zu versehen, eine Erhöhung der Lebensdauer von 200 Stunden auf einen Wert von 800–1000 Stunden erreicht wird.

Ein weiterer grosser Vorteil der Erfindung liegt darin, dass die Zeit für eine nachträgliche Bearbeitung der Keramikhülsen der Pumpen kleiner Leistungen – ebenso wie bei den Keramikeinlagen für Hochleistungspumpen – um 1/10 vermindert werden kann. Es soll dabei aber betont werden, dass Keramikeinlagen für Hochleistungspumpen in Serienproduktion bisher noch nicht verwendet werden konnten.

Als wesentlicher Vorteil soll noch betont werden, dass ein Einkleben des Keramikkörpers im Sinne des Verfahrens gemäss der Erfindung ein Abschleifen der äusseren Zylinderoberfläche völlig erübrigt.

Das Verfahren gemäss der Erfindung wird nachstehend anhand von Ausführungsbeispielen näher erläutert.

Beispiel 1

Für Bohrungspumpen für geologische Bohrungen werden Zylinderhülsen mit Keramikeinlagen hergestellt. Die Herstellung der Keramikeinlagen, die in die vorher angefertigte Stahlkonstruktion der Pumpe eingebettet wird, wird im ersten Verfahrensschritt in Form eines Topfes mit geschlossenem Boden durch Gipsformung der Keramiksuspension mit einem minimalen Aluminiumoxidgehalt von 96% durchgeführt. Die in dieser Weise abgeformte Keramiksuspension wird im ersten Brennzyklus bei einer Temperatur von 1450°C so lange gebrannt, bis der Restporositätswert auf 3–6% eingestellt ist. Da der Keramikkörper bei dieser Temperatur seine endgültige Härte noch nicht erreicht, kann der aus dem Ofen herausgenommene und abgekühlte Keramikkörper entsprechend den vorgeschriebenen endgültigen Abmessungen leicht bearbeitet werden. Danach wird der Keramikkörper im Ofen im Verlauf eines zweiten Ausbrennzyklus bei einer Temperatur von 1500–1700°C völlig ausgebrannt. Schliesslich wird der geschlossene Bodenteil des Keramikkörpers mit einer Diamantscheibe abgestochen. Die Abmessungsverzerrungen, die im Verlaufe der Endschrumpfung zustandekommen, liegen nach unserer Erfahrung mit 95–98% innerhalb der vorgeschriebenen Toleranzwerte. Sollte jedoch irgendeine Abmessung der fertigen Keramikhülse ausserhalb des zulässigen Toleranzbereiches liegen, so muss man natürlich diesen unzulässigen Wert durch Abschleifen korrigieren. Die Keramikhülse wird dann durch eine an sich bekannte Schrumpfverbindung in der Zylinderhülse fixiert. Der Wert der für die Schrumpfverbindung erforderlichen Überlappung liegt bei 0,02–0,03 mm. Die technischen Parameter der fertigen Zylinderhülse sind die folgenden:

– die Wanddicke der Keramikeinlage: 15 mm;
– die Oberflächenrauhigkeit der Bohrung als $R_a$ Wert: mindestens 0,32 Mikron;
– der Aluminiumoxidgehalt des Keramikkörpers: mindestens 96%
Biegefestigkeit: mindestens 350–400 N/mm$^2$
Zugfestigkeit: mindestens 250–300 N/mm$^2$
Härte: mindestens 85–90 HR$_a$
Warmfestigkeit: mindestens 1600°C;
– gegen chemische Stoffe ist die Keramik resistent, gegen Reibungswirkungen widerstandsfähig:

– der Keramikkörper kann einen Wärmestoss von 200–250°C, und die Zylinderhülse im Falle einer Schrumpfverbindung kann eine Dauerwärmebelastung von –40 bis +200°C leicht ertragen.

Beispiel 2

Die Keramikeinlage für die vorher aus hochfestem Stahl hergestellte Stahlkonstruktion der Zylinderhülse wird ähnlich wie in Beispiel 1 mit dem Unterschied gefertigt, dass die äusseren Abmessungen des Keramikkörpers so gewählt werden, dass der Keramikkörper in die Stahl-Zylinderhülse mit lockerer Passung einsetzbar ist. Die Keramikeinlage, die wie in Beispiel 1 beschrieben hergestellt war, und nach dem völligen Ausbrennen in die Zylinderhülse mit lockerer Passung einpassbar ist, braucht nur auf die inneren Abmessungen der Keramikhülse kontrolliert werden und gegebenenfalls braucht ein genaues nachträgliches Abschleifen auf die erforderliche Abmessung nur am Innendurchmesser des Keramikkörpers durchgeführt werden. Das Abstechen des geschlossenen Bodenteiles des Keramikkörpers erfolgt nach dem ersten Brennzyklus. Der Keramikkörper wird in die Zylinderhülse mit Hilfe eines aus einem Vernetzungskunstharz bestehenden Klebemittels eingeklebt und fixiert. Dieses Klebemittel füllt nämlich den durch die lockere Passung zwischen der Keramikeinlage und der Zylinderhülse vorhandenen Spalt völlig aus.

Die technischen Merkmale der in dieser Weise hergestellten Keramikhülse weichen von den Parametern des Beispiels 1 darin ab, dass nach Beispiel 2 die Wanddicke der Keramikhülse 2 mm beträgt und dass die Klebefixierung ohne jegliche Lockerung dieser Verbindung eine Dauerwärmebelastung innerhalb der Temperaturgrenzen von –40 bis +120°C und Wärmestösse von 200–250°C ertragen kann.

**Patenansprüche**

1. Verfahren zum Herstellen vin Keramik-Zylinderhülsen von Bohrungspumpen für geologische Bohrungen, bei welchem eine Keramikhülse mit einem maximalen Durchmesser von 180 mm, einer maximalen Länge von 280 mm, einer Wanddicke von 2–15 mm, einem Aluminiumoxidgehalt von wenigstens 96%, einer Zugfestigkeit von mindestens 3000 N/mm² und einer Warmfestigkeit von mindestens 1600°C hergestellt und in einer Zylinderhülse beispielsweise durch ein Schrumpfverfahren festgelegt wird, dadurch gekennzeichnet, dass die Keramiksuspension zu einem Topf mit geschlossenem Boden geformt wird und dann in der ersten Phase des Ausbrennens bei einer Temperatur von 1450–1500°C bis zu einem Rest-Porositätswert von 3–6% gebrannt wird, dass danach der vorgebrannte Keramikkörper auf die inneren und äusseren vorgeschriebenen Abmessungen der Keramikhülse bearbeitet wird, wonach die zweite Phase des Ausbrennens bei einer Temperatur von 1500–1700°C durchgeführt wird, wobei der geschlossene Bodenteil des topfförmigen Keramikkörpers vor dem Einsetzen der Keramikhülse in die Zylinderhülse abgestochen wird.

2. Verfahren nach Anspruch 1, dadurch gekennzeichnet, dass der äussere Durchmesser der Keramikhülse derart bemessen wird, dass die fertig ausgebrannte Keramikhülse in die Zylinderhülse mit lockerer Passung hineinpasst, und dass die fertig ausgebrannte Keramikhülse in der Zylinderhülse mit einem Vernetzungskunstharz-Klebstoff festgelegt wird.

3. Verfahren nach einem der Patentansprüche 1 oder 2, dadurch gekennzeichnet, dass das Abstechen des geschlossenen Bodenteils des topfförmigen Keramikkörpers nach dem ersten Brennzyklus durchgeführt wird.

**Claims**

1. Method for the production of ceramic-cylinder sleeves of boring pumps for geological drilling, wherein a ceramic liner is produced with a maximum diameter of 180 mm, a maximum length of 280 mm, a wall thickness of 2–15 mm, an aluminium oxide content of at leat 96%, a tensile strength of a least 3000 N/mm², and a heat resistance of at least 1600°C and is fixed in a cylinder sleeve for example through a shrinkage process, characterized in that the ceramic suspension is shaped into a pot with a closed bottom and then is burnt in the first phase of burning-out at a temperature of 1450–1500°C to a rest porosity value of 3–6%, that then the pre-burnt ceramic body is formed to the specified inside and outside dimensions of the ceramic liner, and then the second phase of burning-out ist done at a temperature of 1500–1700°C, wherein the closed bottom part of the ceramic body having a pot form is cut away before inserting the ceramic liner into the cylinder sleeve.

2. Method according to claim 1, characterized in that the outside diameter of the ceramic liner is dimensioned in such a way that the burnt-out ceramic liner completely fits into the cylinder sleeve with loose fit, and that the burn-out ceramic liner completely is fixed into the cylinder sleeve with a cross-linkage synthetic resin adhesive.

3. Method according to one of claims 1 or 2, characterized in that cutting away the closed bottom part of the ceramic body having a pot form is done after the first burn-out cycle.

**Revendications**

1. Procédé pour la fabrication de chemises céramiques pour cylindres de pompes de forage destinées à des forages géologiques, dans lequel on fabrique une chemise en céramique présentant un diamètre maximum de 180 mm, une longueur maximum de 280 mm, une épaisseur de paroi de 2 a 15 mm, une teneur en oxyde d'aluminium d'au moins 96%, un résistance à la traction d'au moins 3000 N/mm² et une résistance à la chaleur jusqu'à au moins 1600°C, et qui est fixée dans une chemise de cylindres par exemple au moyen d'un procédé de contraction, caractérisé en ce que la suspension céramique est mise en forme pour constituer un pot comportant un fond fermé et est ensuite cuite dans la première phase de la cuisson à une température comprise entre 1450 et 1500°C jusqu'à ce qu'elle atteigne une porosité résiduelle de 3 à 6%, en ce qu'ensuite le corps céramique précuit est usiné aux dimensions intérieure et extérieure prescrites, après quoi la deuxième phase de la cuisson est réalisée à une température comprise entre 1500 et 1700°C, la partie fermée de fond du corps céramique en forme de pot étant tronçonnée et détachée avant la mise en place de la chemise céramique dans la chemise de cylindres.

2. Procédé selon la revendication 1, caractérisé en ce que le diamètre extérieur de la chemise céramique a une dimension telle que la chemise céramique complètement cuite est ajustée avec un faible jeu et en ce que la chemise céramique complètement cuite est fixée dans la chemise de cylindres au moyen d'un adhésif à base de résine susceptible de subir une réticulation.

3. Procédé selon l'une quelconque des revendications 1 à 2, caractérisé en ce que le tronçonnage de la partie de fond fermée du corps céramique en forme de pot est réalisée après le premier cycle de cuisson.